(19) Europäisches Patentamt
European Patent Office
Office européen des brevets

(11) **EP 3 014 758 B1**

(12) **FASCICULE DE BREVET EUROPEEN**

(45) Date de publication et mention
de la délivrance du brevet:
**28.08.2019 Bulletin 2019/35**

(21) Numéro de dépôt: **14741347.0**

(22) Date de dépôt: **26.06.2014**

(51) Int Cl.:
*H02P 6/182* ^(2016.01)    *H02P 6/16* ^(2016.01)
*H02P 27/08* ^(2006.01)    *H02P 6/18* ^(2016.01)

(86) Numéro de dépôt international:
**PCT/FR2014/051613**

(87) Numéro de publication internationale:
**WO 2014/207387 (31.12.2014 Gazette 2014/53)**

(54) **DISPOSITIF DE CONTRÔLE D'UN MOTEUR**

MOTORSTEUERUNGSVORRICHTUNG

MOTOR CONTROL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 FR 1356183**

(43) Date de publication de la demande:
**04.05.2016 Bulletin 2016/18**

(73) Titulaire: **SOMFY ACTIVITES SA**
**74300 Cluses (FR)**

(72) Inventeur: **BRUNO, Serge**
**F-74460 Marnaz (FR)**

(74) Mandataire: **Verriest, Philippe et al**
**Cabinet Germain & Maureau**
**12, rue Boileau**
**BP 6153**
**69466 Lyon Cedex 06 (FR)**

(56) Documents cités:
**EP-A1- 0 661 800        WO-A2-2009/068314**
**FR-A1- 2 864 373        FR-A1- 2 956 528**
**US-A1- 2009 189 556     US-A1- 2011 084 639**

EP 3 014 758 B1

**Description**

La présente invention concerne un dispositif de contrôle d'un moteur et un procédé de contrôle d'un moteur.

L'invention trouve application pour le contrôle d'un moteur à commande électronique, tel qu'un moteur « sans balais » ou « sans collecteur ».

Un moteur « sans balais » (encore appelé « brushless» ou BLDC en anglais) comporte classiquement un rotor comprenant plusieurs aimants permanents, et un stator comprenant plusieurs enroulements.

Les enroulements du stator sont alimentés de façon séquentielle par un module de commande afin de générer un champ magnétique tournant. Les aimants permanents du rotor cherchent à chaque instant à s'orienter dans le sens du champ magnétique.

Pour que le moteur tourne, l'alimentation des enroulements doit être contrôlée de sorte que le champ magnétique tournant reste en avance sur les aimants permanents du rotor. Ainsi, un couple moteur est produit.

Une information sur la position du rotor est donc nécessaire pour déterminer les moments de commutation opportuns.

A cette fin, une solution connue consiste à placer des capteurs à effet Hall et détecter le passage des pôles magnétiques par des points prédéterminés.

Un inconvénient d'une telle solution est que l'ajout de capteurs entraîne un surcoût pour le fabricant et accroit le risque de panne.

Une autre solution connue consiste à mesurer le signal réel de force contre électromotrice aux bornes d'un enroulement pendant une fenêtre de temps durant laquelle les bornes de l'enroulement sont déconnectées des bornes d'une alimentation. La position du rotor peut alors être déduite du signal ainsi mesuré.

Un tel enseignement est connu par exemple du document WO 2009/068314.

Un inconvénient d'une telle solution est qu'il est difficile de prélever le signal réel de force contre électromotrice de façon continue. Dès lors, il n'est possible de connaitre la position du rotor que momentanément, autour des passages par zéro du signal. Une puissance de calcul importante est nécessaire pour la gestion des fenêtres d'acquisition du signal.

En outre, le signal réel de force contre électromotrice présente un rapport signal/bruit faible. Aussi, une puissance de calcul importante est requise pour filtrer numériquement le bruit.

Ainsi, lorsque le moteur tourne à faible vitesse, par exemple en phase de démarrage ou d'arrêt, l'amplitude du signal réel de force contre électromotrice, et par suite l'amplitude du signal traité par le module de traitement, sont faibles. Il est alors difficile de déduire avec précision les passages par zéros du signal réel de force contre électromotrice et la position du rotor.

L'invention vise à pallier tout ou partie de ces inconvénients. le dispositif selon l'invention est décrit à la revendication 1 avec des modes préférentiels décrits dans les revendications 2 à 12.

Le procédé selon l'invention est décrit à la revendication 13 avec des modes préférentiels décrits dans les revendications 14 à 17.

L'expression « borne d'un enroulement » peut désigner une extrémité d'un enroulement, un point intermédiaire de l'enroulement, ou encore une extrémité ou un point intermédiaire d'un enroulement additionnel associé audit enroulement, par exemple pour en mesurer le flux magnétique.

L'expression « signal image flottant représentatif d'une force contre-électromotrice» s'entend d'un signal de même fréquence que le signal réel de la force contre-électromotrice. Le signal image flottant peut toutefois présenter une amplitude et une phase distincte du signal réel de la force contre-électromotrice.

Le terme « connecter» s'entend dans son sens le plus large, c'est-à-dire « connecter directement ou indirectement ».

L'expression « caractéristique du module de commande » s'entend d'une caractéristique matérielle ou d'une caractéristique logicielle du module de commande.

L'expression « borne susceptible de présenter un potentiel flottant par rapport à la borne de référence fixe » s'entend d'une borne déconnectée de la borne de référence fixe pendant au moins une durée déterminée.

Le dispositif selon l'invention est avantageux en ce qu'il permet d'obtenir continuellement un signal image flottant représentatif de la force contre-électromotrice.

L'amplitude du signal image flottant n'est pas détériorée par le module de transformation. Aussi, lorsque le moteur est en phase de démarrage il est encore possible d'obtenir un signal image flottant avec fiabilité.

En outre, les fréquences parasites générées par le module de commande sont éliminées grâce au choix de la constante de temps du module de transformation.

Ainsi, le signal image flottant présente un excellent rapport signal/bruit et est obtenu sans calcul. A partir du signal image flottant, il est ensuite possible de déduire certaines caractéristiques du signal réel de la force contre-électromotrice, tels que les passages par zéro ou par des valeurs prédéterminées.

Le dispositif selon l'invention peut comporter une ou plusieurs des caractéristiques suivantes.

Suivant une première possibilité, la seconde borne de l'au moins un module de transformation est connectée à une autre borne de l'enroulement.

Suivant une seconde possibilité, la seconde borne de l'au moins un module de transformation forme une borne de référence flottante.

De préférence, le module de commande présente :

- une pluralité de commutateurs aptes à commuter entre un état passant et un état bloquant ;
- une pluralité de diodes de roue libre montées chacune en parallèle à un commutateur respectif, de sorte qu'à chaque commutation d'un commutateur de son état passant vers son état bloquant, l'enroulement se décharge à travers une diode de roue libre; et

la constante de temps de l'au moins un module de transformation est supérieure ou égale au temps de conduction de chaque diode de roue libre.

Par « temps de conduction d'une diode de roue libre » on entend le temps nécessaire à l'enroulement pour se décharger en totalité à travers la diode de roue libre, lorsque le commutateur associé à cette diode de roue libre commute de son état passant vers son état bloquant.

Un tel agencement assure que le signal image flottant ne s'annule pas avant que l'enroulement ne se soit déchargé en totalité suite à une commutation.

Ainsi, lorsque la loi de commande comprend une succession de séquences, les séquences se succèdent toujours dans un ordre déterminé. La rotation du rotor est assurée sans risque d'oscillation.

Avantageusement, la constante de temps de l'au moins un module de transformation est supérieure ou égale à la constante de temps électrique du moteur.

La constante de temps électrique du moteur est définie par le rapport L/R, où L est la valeur de l'inductance de l'enroulement et R est la valeur de la résistance de l'enroulement.

Cette constante de temps électrique du moteur est supérieure au temps de conduction de chaque diode de roue libre. Un tel cas particulier permet de simplifier la conception du module de transformation, car il permet de dimensionner la constante de temps du module de transformation seulement en fonction des caractéristiques du moteur.

Suivant une caractéristique, la fréquence de la force contre-électromotrice induite dans l'enroulement est susceptible de varier dans une bande de fréquences déterminée ; et

L'au moins un module de transformation est configuré pour :

- conserver les composantes fréquentielles du signal source comprises dans la bande de fréquences déterminée ; et
- couper les composantes fréquentielles du signal source n'étant pas comprises dans la bande de fréquences déterminée.

La fréquence de la force contre-électromotrice induite dans l'enroulement varie en fonction de la vitesse de rotation du rotor Un tel module de transformation permet d'améliorer le rapport signal/bruit du signal image flottant en supprimant les composantes fréquentielles hors de la bande de fréquences déterminée.

Ainsi, lorsque la loi de commande utilise une modulation par largeur d'impulsion (ou PWM), le module de transformation atténue les composantes fréquentielles résultant de cette modulation.

A titre d'exemple, le module de transformation peut comprendre un filtre passe-bas ou un filtre passe-bande.

Avantageusement, le dispositif comporte au moins un module de référencement conçu pour transformer le signal image flottant en un signal référencé par rapport à la borne de référence fixe, ce module de référencement comprenant :

- un étage d'entrée connecté à l'au moins un module de transformation; et
- un étage de sortie isolé de l'étage d'entrée.

Un tel signal référencé est susceptible de subir une conversion analogique/numérique, alors que cela était difficile pour le signal image flottant.

Suivant une possibilité, l'étage de sortie est isolé galvaniquement de l'étage d'entrée, par exemple par des transformateurs ou des optocoupleurs.

Suivant une autre possibilité, l'étage de sortie présente une impédance supérieure à l'étage d'entrée de manière à interdire la circulation d'un courant, par exemple en utilisant des amplificateurs opérationnels isolateurs.

De préférence, l'au moins un module de référencement est conçu pour transformer le signal image flottant en un signal référencé par rapport à la borne de référence fixe et binarisé prenant :

- une première valeur prédéterminée lorsque le signal image flottant aux bornes de l'étage d'entrée est supérieur à un seuil ; et

- une seconde valeur prédéterminée dans le cas contraire.

Suivant une caractéristique, le module de référencement comprend un moyen d'ajustement de la valeur du seuil.

Ainsi, il est possible de régler le déphasage introduit par le module de référencement. A titre d'exemple, le moyen d'ajustement peut être une résistance connectée en entrée du module de référencement.

Suivant un mode de réalisation, l'au moins un module de référencement comprend un premier et un second optocoupleurs, comprenant respectivement une première et une deuxième diodes électroluminescentes, et un premier et un deuxième phototransistors, l'anode de la première diode étant connectée à la cathode de la deuxième diode et l'anode de la deuxième diode étant connectée à la cathode de la première diode.

Il est alors possible d'exploiter le signal référencé et binarisé pour déterminer avec exactitude le rapport cyclique du signal réel de force contre-électromotrice.

Les informations utilisées sont par exemple la connaissance des fronts montants et descendants du signal référencé et binarisé et la connaissance des déphasages introduits par le module de transformation et le module de référencement.

Avantageusement, l'au moins un module de référencement comprend un optocoupleur.

De préférence, le dispositif comporte un module de traitement numérique connecté à l'au moins un module de référencement, conçu pour traiter le signal référencé et binarisé délivré par l'au moins un module de référencement de manière à :

- générer une succession de séquences de commutation selon la loi de commande du module de commande ; et/ou
- compter le nombre de tours effectués par le rotor ; et/ou
- déterminer la position du rotor.

Dans une forme d'exécution préférée, le moteur est un moteur sans balais comprenant trois enroulements connectés suivant un topologie en triangle ou en étoile, le dispositif comportant

- trois modules de transformation chacun associé à un enroulement respectif et connectés suivant une topologie en triangle ou en étoile par rapport aux bornes des enroulements ; et
- trois modules de référencement connectés suivant une topologie en triangle ou en étoile par rapport aux modules de transformation.

L'invention concerne également un procédé de contrôle d'un moteur tel que revendiqué à la revendication 13.

De préférence, le procédé comporte une deuxième étape de transformation de l'au moins un signal image flottant de manière à délivrer au moins un signal référencé par rapport à une borne de référence fixe.

De préférence, le procédé comporte en outre :

- une étape de binarisation de l'au moins un signal référencé ; et
- une étape de génération d'une succession de séquences de commutation du module de commande, à partir

  - du signal référencé et binarisé, et
  - de la loi de commande prédéterminée,

  en appliquant une correction prédéterminée qui tient compte d'au moins un retard introduit lors des étapes de transformation.

Suivant une possibilité, la correction appliquée est prédéterminée au cours d'une phase de conception en fonction des composants électroniques constituant les modules de transformation.

Alternativement, la correction appliquée peut prendre plusieurs valeurs prédéterminées au cours d'une phase de conception, en fonction de plages de valeurs d'au moins un paramètre de fonctionnement, et le procédé comportant en outre une étape de mesure de l'au moins un paramètre de fonctionnement, la correction appliquée étant choisie parmi les valeurs prédéterminées, en fonction de la valeur mesurée de l'au moins un paramètre de fonctionnement.

L'invention sera mieux comprise à l'aide de la description qui suit, en référence aux dessins schématiques annexés représentant, à titre d'exemple, deux dispositifs de contrôle selon l'invention et des signaux traités par ces dispositifs.

Figure 1 est une représentation schématique d'un premier dispositif de contrôle d'un moteur selon l'invention ;
Figure 2 est une représentation schématique d'un module de référencement du dispositif de contrôle de figure 1 ;
Figure 3 est une représentation de signaux traités par le module de référencement de la figure 2 ;

Figure 4 est une représentation schématique d'une variante du module de référencement du dispositif de contrôle de la figure 1. ;

Figure 5 est une représentation de signaux traités par le module de référencement de figure 4 ;

Figure 6 est une représentation d'une loi de commande mise en oeuvre par un module de commande du dispositif de figure 1 ; et

Figures 7 et 8 sont des schémas illustrant des retards des signaux traités par les modules d'un dispositif selon l'invention. Figure 9 est un organigramme d'un procédé de contrôle selon l'invention ;; et

Figure 10 est une représentation schématique d'un second dispositif de contrôle d'un moteur selon l'invention.

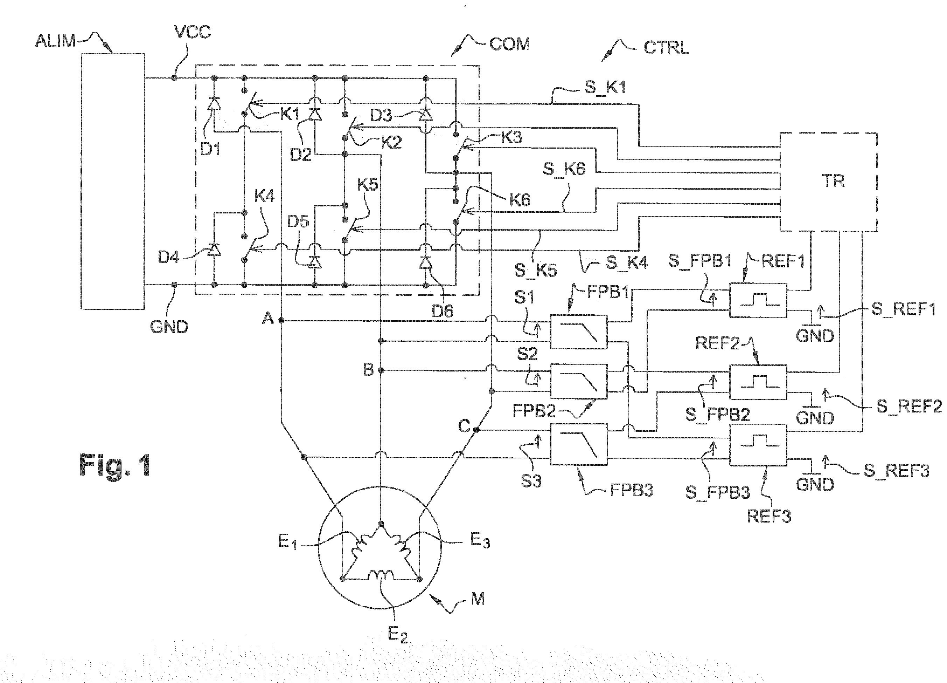

La figure 1 représente un dispositif de contrôle CTRL d'un moteur M triphasé et sans balais.

Le moteur M comporte un stator et un rotor. Le stator est équipé de trois enroulements E1, E2 et E3 connectés en triangle par leurs bornes A, B et C. Le rotor est équipé de trois aimants permanents.

Le moteur M est piloté par un module de commande COM permettant de sélectionner, selon une loi de commande prédéterminée, pour les bornes A, B et C :

- une configuration connectée à une des bornes V ou GND d'une source d'alimentation ALIM ; et
- une configuration déconnectée des bornes V et GND de la source d'alimentation ALIM.

La source d'alimentation ALIM est référencée par rapport à la borne GND qui constitue une borne de référence fixe.

Le module de commande COM comprend des commutateurs K1, K2, K3, K4, K5 et K6, par exemple des transistors ou des relais, aptes à commuter entre un état passant et un état bloquant.

La commutation des commutateurs K1, K2, K3, K4, K5 et K6 est commandée par des signaux S_K1, S_K2, S_K3, S_K4, S_K5 et S_K6 formant ladite loi de commande.

La loi de commande se décompose en une succession de séquences de commutation, chaque séquence correspondant à un ensemble de signaux S_K1, S_K2, S_K3, S_K4, S_K5 et S_K6 pendant une durée déterminée.

Le module de commande COM comprend également des diodes de roue libre D1, D2, D3, D4, D5 et D6 chacune montées en parallèle avec un commutateur K1, K2, K3, K4, K5 et K6 respectif ou intégrées à ces commutateurs.

A chaque commutation d'un commutateur K1, K2, K3, K4, K5 et K6 de son état passant vers son état bloquant, un des enroulements E1, E2 et E3 se décharge à travers une diode de roue libre D1, D2, D3, D4, D5 et D6.

Le temps de conduction des diodes de roue libre D1, D2, D3, D4, D5 et D6 dépend de caractéristiques structurelles des commutateurs K1, K2, K3, K4, K5 et K6 et des diodes D1, D2, D3, D4, D5 et D6, ainsi que de l'intensité du courant présent dans les enroulements E1, E2 et E3 au moment de la commutation.

Le dispositif de contrôle CTRL comporte trois modules de transformations FPB1, FPB2 et FPB3.

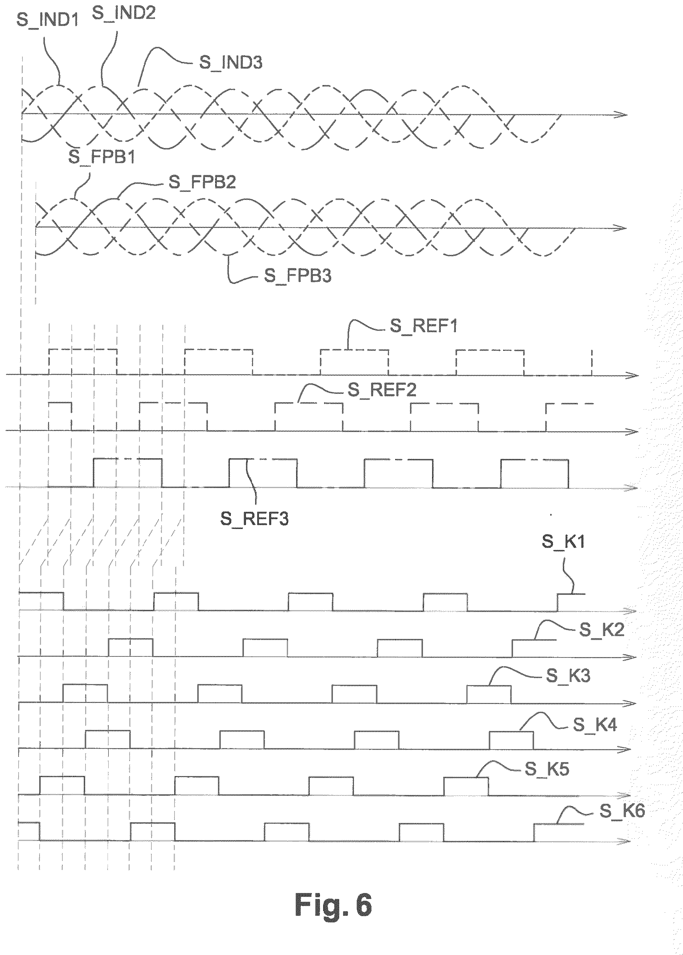

Les modules de transformations FPB1, FPB2 et FPB3 sont configurés pour transformer des signaux sources S1, S2, S3 prélevés aux bornes des enroulements E1, E2 et E3 en des signaux images flottants S_FPB1, S_FPB2 et S_FPB3 représentatifs de signaux réels de force contre-électromotrice S_IND1, S_IND2 et S_IND3 (représentés à la figure 6) induits dans les enroulements E1, E2 et E3.

Les signaux images flottants S_FPB1, S_FPB2 et S_FPB3 présentent la même fréquence que les signaux réels de force contre-électromotrice S_IND1, S_IND2 et S_IND3.

En condition d'utilisation, les signaux réels de force contre-électromotrice S_IND1, S_IND2 et S_IND3 varient dans une bande de fréquences déterminée.

Les modules de transformation FPB1, FPB2 et FPB3 sont configurés pour :

- conserver les composantes fréquentielles des signaux sources S1, S2 et S3 comprises dans la bande de fréquences déterminée ; et
- couper les composantes fréquentielles du signal source S1, S2 et S3 n'étant pas comprises dans la bande de fréquences déterminée.

Les modules de transformation FPB1, FPB2 et FPB3 présentent des constantes de temps supérieures au temps de conduction des diodes de roue libre D1, D2, D3, D4, D5 et D6 dans l'application considérée. et supérieure à la constante de temps électrique du moteur M.

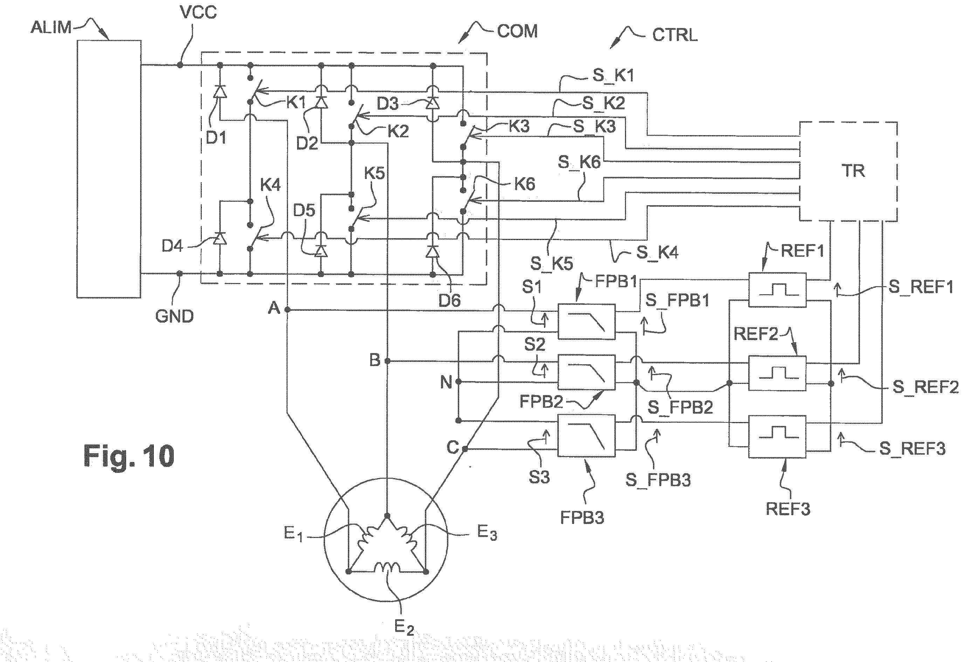

Dans le mode de réalisation de la figure 1, les modules de transformation FPB1, FPB2 et FPB3 comprennent des filtres passe-bas et sont connectés aux bornes A, B et C suivant une topologie en triangle. Une autre topologie de connexion en étoile entre les modules de transformation FPB1, FPB2 et FPB3 et les bornes A, B, C, est illustré par la figure 10.

Les modules de transformation FPB1, FPB2 et FPB3 introduisent un retard $\theta 1$ des signaux S_FPB1, S_FPB2 et S_FPB3 par rapport aux signaux S_IND1, S_IND2 et S_IND3.

Ce retard θ1 varie en fonction de paramètres de fonctionnement (la vitesse du moteur, le couple moteur, l'intensité du courant dans les enroulements, la température), ainsi qu'en fonction de caractéristiques électriques (L, R) des enroulements E1, E2, E3 du moteur, et de composants électroniques constituant les modules de transformation FPB1, FPB2, FPB3.

Le retard θ1 peut varier entre deux valeurs θ1 min et θ1 MAX, qui peuvent être déterminées en phase de conception, en tenant compte des conditions extrêmes de fonctionnement de l'application. Les valeurs θ1 min et θ1MAX peuvent être ajustés, en choisissant les composants électroniques constituant les modules de transformation FPB1, FPB2, FPB3.

Ainsi la variation du retard θ1 introduit par les modules de transformation FPB1, FPB2 et FPB3 peut être encadrée en phase de conception.

Le dispositif de contrôle CTRL comporte trois modules de référencement REF1, REF2 et REF3 conçus pour transformer les signaux images flottants S_FPB1, S_FPB2 et S_FPB3 en des signaux S_REF1, S_REF2 et S_REF3 référencés par rapport à la borne de référence fixe GND et binarisés.

Chaque module de référencement REF1 comprend :

- un étage d'entrée 10 dont les bornes sont connectées à des bornes de sortie du module de transformation FPB1; et
- un étage de sortie 12 isolé galvaniquement de l'étage d'entrée 10.

Les modules de référencement REF1, REF2 et REF3 sont identiques. Aussi, seul le module de référencement REF1 est décrit par la suite.

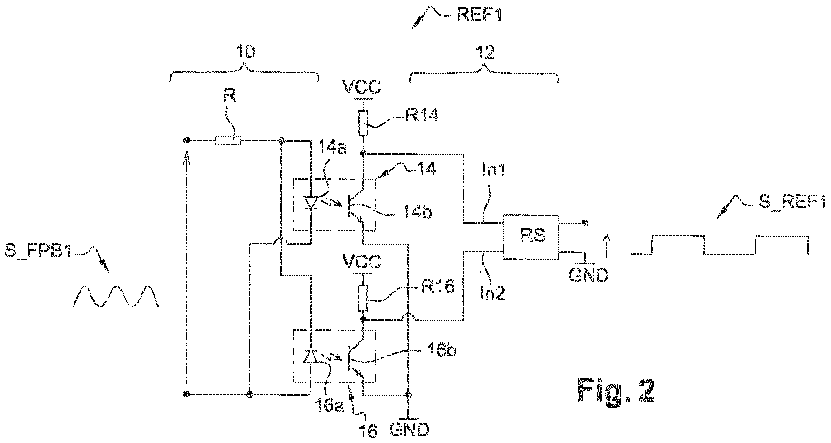

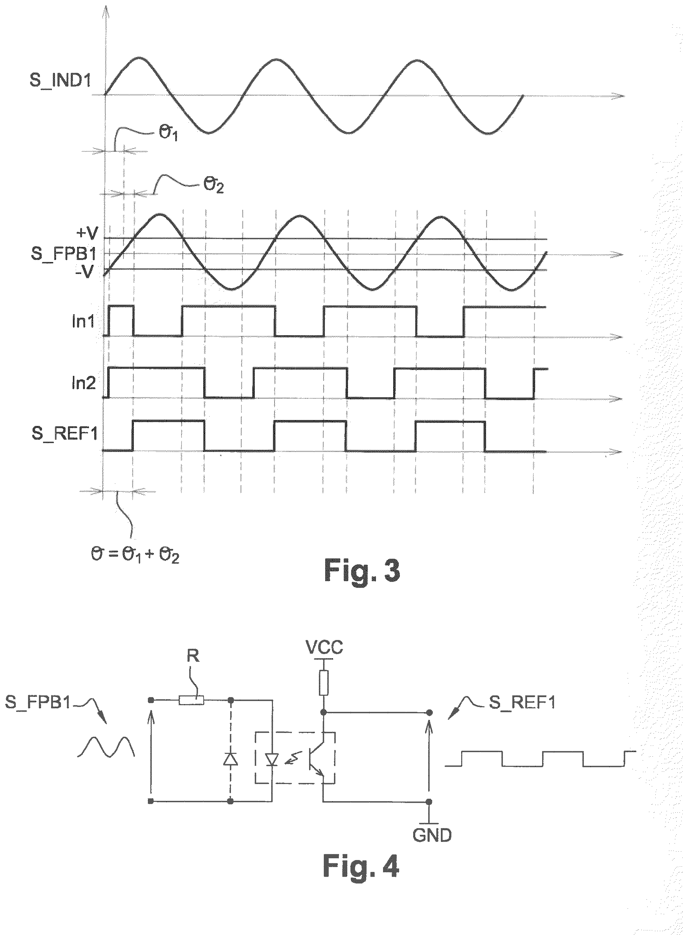

Suivant un premier mode de réalisation (représenté aux figures 2 et 3), le module de référencement REF1 comprend deux optocoupleurs 14 et 16.

Chaque optocoupleur 14, 16 présente une diode électroluminescente 14a, 16a connectée aux bornes de l'étage d'entrée 10 et un phototransistor 14b, 16b connecté aux bornes de l'étage de sortie 12.

L'anode de la première diode 14a est connecté au cathode de la deuxième diode 16a et réciproquement.

La diode électroluminescente 14a est conçue pour émettre de la lumière uniquement lorsque le signal image flottant S_FPB1 aux bornes de l'étage d'entrée 10 est supérieur à une valeur +V_SEUIL.

La diode électroluminescente 16a est conçue pour émettre uniquement lorsque le signal image flottant S_FPB1 aux bornes de l'étage d'entrée 10 est inférieur à une valeur-V_SEUIL.

Les phototransistors 14b, 16b, sont connectés à une borne VCC d'alimentation par des résistances respectivement R14 et R16.

Les sorties des deux optocoupleurs sont connectées aux bornes d'entrée In1 et In2 d'une bascule RS. Le signal S_REF1 est généré par la bascule RS.

Comme illustré par la figure 3, les transitions montantes du signal S_REF1 correspondent aux passages du signal S_FPB1 par la valeur prédéterminée +V_SEUIL, dans le sens montant ; les transitions descendantes du signal S_REF1 correspondent aux passages du signal S_FPB1 par la valeur prédéterminée -V_SEUIL, dans le sens descendant.

Les instants de passage du signal S_FPB1 par la valeur prédéterminée +V_SEUIL, dans le sens montant, présentent un retard θ2 par rapport aux passages du même signal S_FPB1 par zéro, dans le sens montant ; les instants de passage du signal S_FPB1 par la valeur prédéterminée - V_SEUIL dans le sens descendant, présentent un même retard θ2 par rapport aux passages du signal S_FPB1 par zéro dans le sens descendant.

Ainsi, les transitions montantes du signal S_REF1 présentent un retard θ2 par rapport aux passages du signal S_FPB1 par 0, dans le sens montant ; les transitions descendantes du signal S_REF1 présentent un retard θ2 par rapport aux passages du signal S_FPB1 par 0, dans le sens descendant. Le retard θ2 est identique pour chacun des optocoupleurs.

L'étage d'entrée 10 comprend avantageusement une résistance R connectée en série aux diodes électroluminescentes 14a, 16a. La résistance R permet d'ajuster le seuil de détection du signal image S_FPB1 et par conséquent d'ajuster le retard θ2 introduit par le module de référencement S_REF1.

Une augmentation de la résistance R entraine une augmentation du retard θ2 tandis qu'une réduction de la résistance entraine une réduction du retard θ2. Ainsi, la valeur du retard θ2 dans la bande de fréquence déterminée peut être ajustée et encadrée en phase de conception.

En sortie du module de référencement REF1 on retrouve donc un signal S_REF1 dont les transitions présentent un retard total θ par rapport aux instants de passage par 0 du signal réel de force contre-électromotrice S_IND1. Ce retard total θ, étant égal à la somme des deux retards θ1 et θ2 introduits respectivement par les deux modules FPB1 et REF1, peut être par conséquent ajustée et encadrée en phase de conception.

Les modules de référencement REF1, REF2, REF3 peuvent être connectés aux modules de transformation FPB1, FPB2 et FPB3 suivant une topologie en triangle, comme illustré par la figure 1, ou en étoile, comme illustré par la figure 10. Il est important de noter que la topologie des connexions entre les modules de référencement REF1, REF2, REF3 et les modules de transformation FPB1, FPB2 et FPB3 est indépendante de la topologie des connexions entre les modules de transformation FPB1, FPB2 et FPB3 et les bornes A, B, C des enroulements. Ainsi des combinaisons (non illustrées) d'une topologie en triangle de la connexion des modules de transformation FPB1, FPB2, FPB3 aux bornes A, B, C, et d'une topologie en étoile des connexions entre les modules de référencement REF1, REF2, REF3 et les modules de transformation FPB1, FPB2 et FPB3 (ou inversement) s'inscrivent dans le périmètre de l'invention. Le dispositif de contrôle CTRL comporte aussi un module de traitement numérique TR connecté aux bornes des étages de sorties 12 des modules de référencement REF1, REF2 et REF3.

Le module de traitement TR est conçu pour traiter les signaux S_REF1, S_REF2, S_REF3 de manière à :

- générer les signaux S_K1, S_K2, S_K3, S_K4, S_K5 et S_K6 de la loi de commande; et/ou
- compter le nombre de tours effectués par le rotor ; et/ou
- déterminer la position du rotor.

Un deuxième mode de réalisation du dispositif de contrôle CTRL sera maintenant décrit ; cette variante du dispositif de contrôle CTRL est similaire à la première, à l'exception du module de référencement REF1. Ainsi, le module de référencement REF1

- reçoit en entrée le signal image S_ FPB1, présentant le retard θ1, par rapport au signal correspondant S_IND1 ; ce retard θ1 peut entre encadré en phase de conception entre les valeurs θ1min et θ1MAX ;
- délivre en sortie un signal S_REF1.

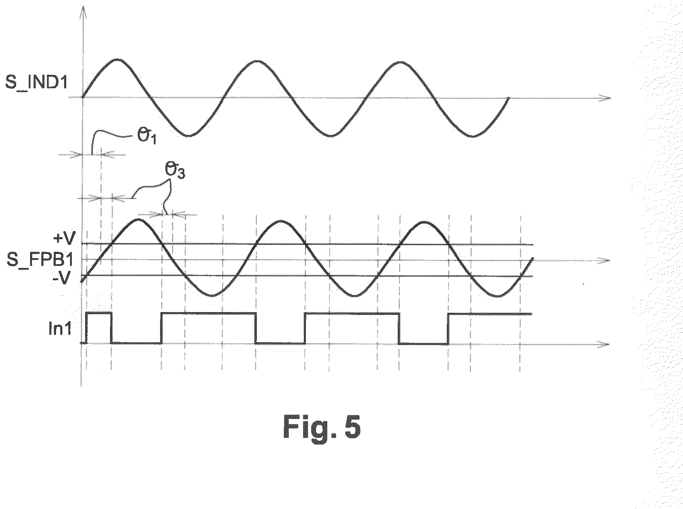

Suivant ce second mode de réalisation (représenté aux figures 4 et 5) le module de référencement REF1 comprend un seul optocoupleur. Une détection de seuil sur le signal image S_FPB1 n'intervient alors que sur une des alternances du signal S_FPB1.

Comme illustré par la figure 5, les transitions descendantes du signal S_REF1 correspondent aux passages du signal S_FPB1 par la valeur prédéterminée +V_SEUIL, dans le sens montant ; les transitions montantes du signal S_REF1 correspondent aux passages du signal S_FPB1 par la même valeur prédéterminée +V_SEUIL, dans le sens descendant.

Les instants de passage du signal S_FPB1 par la valeur prédéterminée +V_SEUIL, dans le sens montant, présentent un retard θ3 par rapport aux passages du même signal S_FPB1 par zéro, dans le sens montant ; les instants de passage du signal S_FPB1 par la même valeur prédéterminée + V_SEUIL dans le sens descendant, présentent une avance θ3 par rapport aux instants de passages du signal S_FPB1 par zéro dans le sens descendant.

Ainsi, les transitions descendantes du signal S_REF1 présentent un retard θ3 par rapport aux passages du signal S_FPB1 par 0, dans le sens montant ; les transitions montantes du signal S_REF1 présentent une avance θ3 par rapport aux passages du signal S_FPB1 par 0, dans le sens descendant.

La résistance R permet, de la même manière que dans le premier exemple, d'ajuster le seuil de détection +V_SEUIL du signal image S_FPB1 et donc le retard, respectivement l'avance θ3.

Il est à noter que si le seuil de conduction de l'optocoupleur est largement inférieur à l'amplitude du signal d'entrée, le retard, respectivement l'avance θ3 peuvent être considérés négligeables; le retard total θ des transitions du signal S_REF1 par rapport aux instants de passage par 0 du signal réel de force contre-électromotrice S_IND1 est sensiblement égal au retard θ1 introduit par le module de transformation FPB1. Si ce n'est pas le cas, le retard total θ prendra les valeurs θ1+θ3, respectivement θ1-θ3

En sortie du module de référencement REF1 on retrouve donc un signal S_REF1 dont les transitions présentent un retard total θ par rapport aux instants de passage par 0 du signal réel de force contre-électromotrice S_IND1 égal à θ1 ± θ3.

Le signal S_REF1 est utilisé par le module de traitement numérique TR pour la génération des signaux S_Ki de la loi de commande, le comptage du nombre de tours effectués par le rotor et la détermination de la position du rotor par le dispositif de contrôle CTRL.

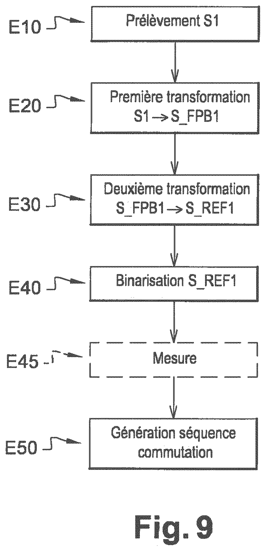

Un procédé de contrôle du moteur M par le dispositif CTRL est maintenant décrit en référence à la figure 9.

Le moteur M est piloté par le module de commande COM qui permet de sélectionner, selon une loi de commande prédéterminée, pour les bornes A, B, C des enroulements soit une configuration connectée à une des bornes V, GND, d'une source d'alimentation référencée, ALIM, soit une configuration déconnectée des bornes V, GND, de la source d'alimentation ALIM.

La loi de commande se décompose en une succession de séquences de commutation correspondant à un ensemble d'états des commutateurs K1, K2, K3, K4, K5 et K6. Les états de ces commutateurs sont commandés par les signaux S_K1, S_K2, S_K3, S_K4, S_K5 et S_K6.

Un premier exemple de génération des signaux S_K1, S_K2, S_K3, S_K4, S_K5 et S_K6 à partir de signaux S_REF1, S_REF2, S_REF3 sera maintenant décrit. Dans cet exemple les modules de référencement REF1, REF2, REF3 sont réalisés selon leur premier mode de réalisation (représenté aux figures 2 et 3).

Lors d'une étape E10, les modules de transformation FPB1, FPB2 et FPB3 prélèvent les signaux source S1, S2, S3 aux bornes A, B, C des enroulements E1, E2, E3.

Lors d'une étape E20, les modules de transformation FPB1, FPB2 et FPB3 transforment les signaux source S1, S2, S3 en signaux images flottants S_FPB1, S_FPB2, S_FPB3 représentatifs des signaux de forces contre-électromotrices S_IND1, S_IND2, S_IND3 induites dans les enroulements E1, E2, E3.

Lors d'étapes E30 et E40, mises en oeuvre simultanément, les modules de référencement transforment les signaux images flottants S_FPB1, S_FPB2, S_FPB3 en signaux S_REF1, S_REF2, S_REF3, référencés par rapport à la borne de référence fixe GND et binarisés.

Lors d'une étape E50, les signaux S_K1, S_K2, S_K3, S_K4, S_K5 et S_K6 sont générés à partir des signaux S_REF1, S_REF2, S_REF3 et d'une loi de commande prédéterminée et en appliquant une correction prédéterminée qui tient compte des retards $\theta1$, $\theta2$ introduits respectivement par les modules FPB1, FPB2,FPB3, et REF1, REF2, REF3

Pour commander de façon optimale le moteur M, les signaux S_K1, S_K2, S_K3, S_K4, S_K5 et S_K6 doivent faire commuter des commutateurs K1, K2, K3, K4, K5 et K6 à chaque passage par zéro d'un signal réel de force contre-électromotrice S_IND1, S_IND2 et S_IND3, selon des lois de commandes connues.

Les passages par zéro des forces contre-électromotrices, constituent des moments de commutation théoriques.

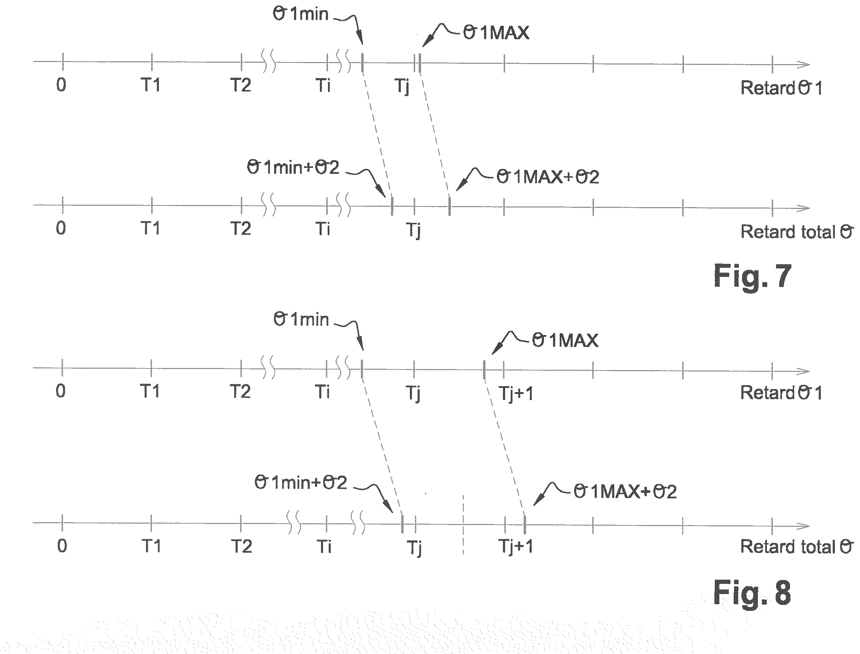

Sur la figure 7, pour une application utilisant trois enroulements E1, E2, E3, l'intervalle entre deux moments de commutation théoriques correspond à un sixième de la période électrique. Nous allons noter cet intervalle $\Delta T$ et ces moments de commutation théoriques T1, Ti, Tj, etc.

Selon des techniques connues, les passages par zéro des signaux réels de force contre-électromotrice S_IND1, S_IND2, S_IND3 sont détectés par des capteurs matériels ou par calcul. Une nouvelle séquence de commutation est générée à chaque passage ainsi détecté, en utilisant des moyens matériels, par exemple des circuits logiques combinatoires, des moyens logiciels, par exemple des listes chaînés, ou une combinaison des moyens matériels et logiciels. Il est important de noter que la génération des séquences de commande est cyclique dans le temps.

Selon l'invention,les nouvelles séquences de commutation sont générées lors des transitions des signaux S_REF1, S_REF2, S_REF3. Grâce à la correction appliquée, les moments d'envoi des nouvelles séquences de commutation se situent aussi près que possible des moments de commutation théoriques auxquels ces séquences devraient être envoyées.

De cette manière, les séquences de commutation sont envoyées dans l'ordre attendu selon les lois de commutation connues, et l'écart entre les moments effectifs d'envoi et les moments théoriques de commutation est borné.

Comme illustré par la figure 3, le signal image S_FPB1 présente un retard $\theta1$ par rapport au signal réel de force contre-électromotrice S_IND1. En particulier, les moments de passage par zéro du signal S_FPB1 présentent un retard $\theta1$ par rapport aux passages par zéro du signal S_IND1. Les transitions du signal S_REF1 présentent également un retard $\theta2$ par rapport aux passages par zéro du signal image S_FPB1.

Ainsi, les transitions des signaux S_REF1, S_REF2 et S_REF3 présentent un retard total $\theta$ par rapport aux instants de passage par zéro des signaux réels de force contre-électromotrice S_IND1, S_IND2 et S_IND3, où le retard $\theta$ est égal à la somme des retards $\theta1$ et $\theta2$.

Comme expliqué plus haut, les passages par zéro des signaux réels de force contre-électromotrice S_IND1, S_IND2, S_IND3 correspondent aux moments de commutation théorique. Les transitions des signaux S_REF1, S_REF2 et S_REF3 présentent donc le même retard total $\theta$ par rapport à ces moments théoriques de commutation.

Le retard total $\theta$ varie entre deux valeurs, $\theta min$ et $\theta MAX$ avec

$$\theta min = (\theta1 min + \theta2) \text{ et } \theta MAX = (\theta1 MAX + \theta2),$$

La plage de valeurs que le retard total $\theta$ peut prendre a une largeur $\Delta\theta$ égale à :

$$((\theta1 MAX + \theta2) - (\theta1 min + \theta2)) = (\theta1 MAX - \theta1 min).$$

Dans un premier cas considéré, le plus simple, l'écart $\Delta\theta$ entre $\theta1 MAX$ et $\theta1 min$, est inférieur à l'intervalle $\Delta Ts$ entre deux moments de commutation théoriques successifs. En ajustant si nécessaire $\theta2$, on peut obtenir une plage de valeurs possibles du retard total $\theta$ distribuée autour d'un moment de commutation théorique Tj, de manière a obtenir :

$$Tj - \Delta Ts/2 < \theta min < \theta < \theta MAX < Tj + \Delta Ts/2.$$

Ce cas est illustré par la figure 7.

Quelle que soit la valeur du retard total $\theta$ du moment où a lieu la transition du signal S_REF1, qui est le moment t d'envoi effectif d'une nouvelle séquence de commutation SEQ_i, par rapport au moment de passage par zéro du signal correspondant S_IND1, qui est le moment Ti théorique où cette nouvelle séquence est attendue, on a :

$$Tj - \Delta Ts/2 \ < \ \theta \ < \ Tj + \Delta Ts/2.$$

Avec $\theta$ = t - Ti, on obtient :

$$Tj - \Delta Ts/2 \ < \ t - Ti \ < \ Tj + \Delta Ts/2,$$

ou encore

$$Tj + Ti \ - \Delta Ts/2 \ \ < \ t \ < \ Tj + Ti \ + \Delta Ts/2.$$

Ainsi, le moment effectif de l'envoi d'une séquence SEQ_i, attendue à Ti se situe, dans ce premier cas, toujours autour du moment théorique de commutation Ti +Tj.

Pour obtenir l'envoi effectif d'une nouvelle séquence de commutation SEQ_i en accord avec la loi de commande attendue, c'est-à-dire autour du moment théorique Ti où cette séquence est attendue, il faut donc envoyer autour du moment Ti + Tj la séquence attendue à Ti, en anticipant l'envoi des commandes.

Comme l'envoi des séquences de commutation est cyclique, l'envoi des commandes avec anticipation peut être obtenu selon des techniques connues. Par exemple, si la génération des nouvelles séquences est faite par logiciel, on peut appliquer un retard supplémentaire de T - Tj, où T est un cycle de génération. Dans un autre exemple, la génération des commandes peut être effectuée à partir d'une liste associant à chaque passage par zéro d'un signal S_IND1, S_IND2, S_IND3, une séquence de commutation. La génération des commandes étant cyclique, cette table est de type « liste circulaire ». Dans une telle table, pour anticiper l'envoi de la première séquence de Tj, avec j = 1, on envoie le dernier élément de la liste ; pour j=2, on envoie l'avant dernier élément de la liste, et ainsi de suite. Cette correction est alors dite statique, car l'anticipation des commandes est appliquée est toujours de la même manière. On cherchera à mettre en oeuvre ce mode statique en dimensionnant $\theta 1$ et $\theta 2$ se sorte que $\Delta\theta < \Delta Ts$ et que la plage de valeurs $\Delta\theta$ soit toujours distribuée autour d'un seul moment théorique de commutation Tj (Tj - $\Delta Ts/2 < \theta < Tj + \Delta Ts/2$).

Un deuxième exemple de génération des signaux S_K1, S_K2, S_K3, S_K4, S_K5 et S_K6 de la loi de commande est maintenant décrit. Cet exemple est applicable si l'écart $\Delta\theta$ entre $\theta 1$ MAX et $\theta 1$min, est supérieur à l'intervalle $\Delta Ts$ et/ou est distribué autour de deux moments théoriques de commutation, Tj et Tj+1 (tel que représenté à la figure 8).

Dans ce cas, le moment de commutation théorique le plus proche n'est plus unique pour toutes les conditions de fonctionnement. Par conséquent il doit être déterminé en cours de fonctionnement, afin d'appliquer la correction adaptée, dite correction dynamique.

Comme dans le premier exemple, les modules de référencement REF1, REF2, REF3 sont réalisés selon leur premier mode de réalisation (représenté aux figures 2 et 3).

Le principe de la correction à appliquer est le même que pour la correction statique, c'est-à-dire anticiper l'envoi des commande de manière à envoyer la commande attendue à Ti au moment Ti+Tj, respectivement Ti+Tj+1.

Pendant la phase de conception, pour des modules FPB1, FPB2, FPB3 donnés, les valeurs du retard $\theta 1$ peut être déterminées en fonction des composants constituant ces modules et des paramètres de fonctionnement (la vitesse du moteur, le couple moteur, l'intensité du courant dans les enroulements, la température). Les signaux S_FPB1, F_PB2, FPB3, prélevés en sortie des circuit FPB1, FPB2, FPB3 peuvent être utilisés pour contrôler en phase de conception les valeurs prises par le retard $\theta 1$ Le retard $\theta 2$, introduit par les modules de référencement, peut être déterminé en phase de conception par les choix des composants constituant ces modules ; il peut être ajusté si nécessaire, grâce à la résistance R. Ainsi, pour chaque valeur ou ensemble de valeurs des paramètres de fonctionnement, le retard total $\theta$ est connu, le moment théorique de commutation le plus proche, et par conséquent la correction à appliquer peuvent être déterminés

En phase de fonctionnement, le procédé comporte les étapes de prélèvement E10, de transformation E20 et E30, de binarisation E40. Il comporte en outre une étape E45 de mesure du ou des paramètres de fonctionnement, la correction à appliquer étant choisie parmi les valeurs prédéterminées en phase de conception, en fonction de la valeur mesurée du ou des paramètres de fonctionnement. Cette correction est ensuite appliquée lors de l'étape E50.

Un troisième exemple de génération des signaux S_K1, S_K2, S_K3, S_K4, S_K5 et S_K6 de la loi de commande est maintenant décrit. Dans ce troisième exemple les modules de référencement REF1, REF2, REF3 sont réalisés selon leur second mode de réalisation (représenté aux figures 4 et 5).

Les modules de référencement REF1, REF2, REF3, comportent un seul optocoupleur. Le retard total θ varie alors entre (θ1min - θ3) et (θ1MAX +θ3). En dimensionnant θ1min, θ1MAX et θ3 de sorte que Δθ < ΔTs et que la plage de valeurs Δθ soit toujours distribuée autour d'un seul moment théorique de commutation Tj, la correction à appliquer sera la même quelles que soient les conditions de fonctionnement, et les étapes du procédé seront similaires aux étapes décrites pour le premier exemple de génération des signaux.

Un quatrième exemple de génération des signaux S_K1, S_K2, S_K3, S_K4, S_K5 et S_K6 de la loi de commande est maintenant décrit.Cet exemple est applicable si l'écart Δθ entre θ1MAX et θ1min, est supérieur à l'intervalle ΔTs et/ou est distribué autour de deux moments théoriques de commutation, Tj et Tj+1 (tel que représenté à la figure 8).

Comme pour le troisième exemple, les modules de référencement REF1, REF2, REF3 sont réalisés selon leur seconde mode de réalisation (représenté aux figures 4 et 5) et le retard total θ varie entre (θ1min - θ3) et (θ1MAX +θ3).

En phase de conception la variation du retard θ peut être déterminée en fonction des paramètres de fonctionnement.

En phase de fonctionnement, une correction dynamique sera appliquée en fonction des paramètres de fonctionnement mesurés, et les étapes du procédé seront similaires aux étapes décrites pour deuxième exemple de génération des signaux.

Une méthode de comptage du nombre de tours du rotor est maintenant décrite.

Lorsque le moteur est à l'arrêt, le module de traitement TR initialise la valeur d'un registre à zéro. Lorsque le moteur est mis en marche, le module de traitement TR incrémente la valeur dudit registre à chaque front montant ou à chaque front descendant d'un signal S_REF1, S_REF2 et S_REF3 déterminé. La valeur du registre indique le nombre de tours effectué par le rotor.

Une méthode de détermination de la position du rotor est maintenant décrite : chaque séquence de la loi de commande est associée à une position du rotor. Lorsque le moteur est à l'arrêt, le module de traitement TR mémorise dans un registre une valeur correspondant à la dernière séquence de la loi de commande mise en oeuvre. Lorsque le moteur est mis en marche, le module de traitement actualise la valeur dudit registre à chaque séquence mise en oeuvre.

## Revendications

**1.** Dispositif de contrôle d'un moteur (M) du type comprenant un stator et un rotor, le stator étant équipé d'au moins un enroulement, le moteur (M) étant piloté par un module de commande (COM) permettant de sélectionner, selon une loi de commande prédéterminée, pour des bornes (A, B, C) de l'au moins un enroulement :

• une configuration connectée à une des bornes (V, GND) d'une source d'alimentation référencée par rapport à une borne de référence fixe (GND) ; et
• une configuration déconnectée des bornes de la source (V, GND) d'alimentation,

- le dispositif de contrôle comportant au moins un module de transformation (FPB1, FPB2, FPB3) permettant de transformer un signal source (S1, S2, S3) prélevé à au moins une des bornes (A, B, C) de l'enroulement en un signal image flottant (S_FPB1, S_FPB2, S_FPB3) représentatif d'une force contre-électromotrice induite dans l'enroulement, le module de transformation présentant :

○ une constante de temps déterminée à partir de caractéristiques du moteur (M) et/ou de caractéristiques du module de commande (COM) ;
○ au moins une première borne connectée à ladite au moins une des bornes de l'enroulement (A, B, C), et une seconde borne (N, B, C, A), les première et seconde bornes étant susceptibles de présenter un potentiel flottant par rapport à la borne de référence fixe (GND), le signal source (S1, S2, S3) étant prélevé entre les première et seconde bornes,

- dans ce dispositif la fréquence de la force contre-électromotrice induite dans l'enroulement est susceptible de varier dans une bande de fréquences déterminée ; et
au moins un module de transformation (FPB1, FPB2, FPB3) est configuré pour :

○ conserver les composantes fréquentielles du signal source (S1, S2, S3) comprises dans la bande de fréquences déterminée ; et
○ couper les composantes fréquentielles du signal source (S1, S2, S3) n'étant pas comprises dans la bande de fréquences déterminée.

**2.** Dispositif selon la revendication 1, **caractérisé en ce que** la seconde borne de l'au moins un module de transformation (FPB1, FPB2, FPB3) est connectée à une autre borne (B, C, A) de l'enroulement.

**3.** Dispositif selon la revendication 1, **caractérisé en ce que** la seconde borne de l'au moins un module de transformation (FPB1, FPB2, FPB3) forme une borne de référence flottante (N).

**4.** Dispositif selon l'une quelconque des revendications 1 à 3, **caractérisé en ce que** le module de commande (COM) présente :

  • une pluralité de commutateurs (K1-K6) aptes à commuter entre un état passant et un état bloquant ;
  • une pluralité de diodes de roue libre (D1-D6) montées chacune en parallèle à un commutateur (K1-K6) respectif, de sorte qu'à chaque commutation d'un commutateur (K1-K6) de son état passant vers son état bloquant, l'enroulement se décharge à travers une diode de roue libre (D1-D6); et
  • **en ce que** la constante de temps de l'au moins un module de transformation (FPB1, FPB2, FPB3) est supérieure ou égale au temps de conduction de chaque diode de roue libre (D1-D6).

**5.** Dispositif selon l'une quelconque des revendications 1 à 4, **caractérisé en ce que** la constante de temps de l'au moins un module de transformation (FPB1, FPB2, FPB3) est supérieure ou égale à la constante de temps électrique du moteur (M).

**6.** Dispositif selon l'une quelconque des revendications 1 à 5, **caractérisé en ce qu'**il comporte au moins un module de référencement (REF1, REF2, REF3) conçu pour transformer le signal image flottant (S_FPB1, S FPB2, S_FPB3) en un signal référencé (S_REF1, S_REF2, S_REF3) par rapport à la borne de référence fixe (GND), ce module de référencement (REF1, REF2, REF3) comprenant :

  • un étage d'entrée (10) connecté à l'au moins un module de transformation (FPB1, FPB2, FPB3) ; et
  • un étage de sortie (12) isolé de l'étage d'entrée.

**7.** Dispositif selon la revendication 6, **caractérisé en ce que** l'au moins un module de référencement (REF1, REF2, REF3) est conçu pour transformer le signal image flottant (S_FPB1, S_FPB2, S_FPB3) en un signal référencé (S_REF1, S_REF2, S_REF3) par rapport à la borne de référence fixe (GND) et binarisé prenant :

  • une première valeur prédéterminée lorsque le signal image flottant (S_FPB1, S_FPB2, S_FPB3) aux bornes de l'étage d'entrée est supérieur à un seuil (V_SEUIL); et
  • une seconde valeur prédéterminée dans le cas contraire.

**8.** Dispositif selon la revendication 7, **caractérisé en ce que** l'au moins un module de référencement (REF1, REF2, REF3) comprend un moyen d'ajustement de la valeur du seuil (V_SEUIL).

**9.** Dispositif selon l'une des revendications 6 à 8, **caractérisé en ce que** l'au moins un module de référencement (REF1, REF2, REF3) comprend un premier et un second optocoupleurs (14, 16) comprenant respectivement :

  • une première et une deuxième diodes (14a, 16a) électroluminescentes ; et
  • un premier et un deuxième phototransistors (14b, 16b), l'anode de la première diode (14a) étant connectée à la cathode de la deuxième diode (16a) et l'anode de la deuxième diode (14b) étant connectée à la cathode de la première diode (14a)l.

**10.** Dispositif selon l'une des revendications 6 à 8, **caractérisé en ce que** l'au moins un module de référencement (REF1, REF2, REF3) comprend un optocoupleur.

**11.** Dispositif selon une des revendications 7 à 10, **caractérisé en ce qu'**il comporte un module de traitement numérique (TR) connecté à l'au moins un module de référencement (REF1, REF2, REF3), conçu pour traiter le signal référencé (S_REF1, S_REF2, S_REF3) et binarisé délivré par l'au moins un module de référencement (REF1, REF2, REF3) de manière à :

  • générer une succession de séquences de commutation selon la loi de commande du module de commande (COM) ; et/ou
  • compter le nombre de tours effectués par le rotor ; et/ou

• déterminer la position du rotor.

**12.** Dispositif selon l'une quelconque des revendications 1 à 11, **caractérisé en ce que** le moteur (M) est un moteur sans balais comprenant trois enroulements (E1, E2, E3) connectés suivant une topologie en triangle ou en étoile, et **en ce que** le dispositif comporte :

• trois modules de transformation (FPB1, FPB2, FPB3) chacun associé à un enroulement respectif et connectés suivant une topologie en triangle ou en étoile par rapport aux bornes (A, B, C) des enroulements ; et
• trois modules de référencement (REF1, REF2, REF3) connectés suivant une topologie en triangle ou en étoile par rapport aux modules de transformation (FPB1, FPB2, FPB3).

**13.** Procédé de contrôle d'un moteur du type comprenant un stator et un rotor, le stator étant équipé d'au moins un enroulement, le moteur (M) étant piloté par un module de commande (COM) permettant de sélectionner, selon une loi de commande prédéterminée, pour des bornes (A, B, C) de l'au moins un enroulement :

• une configuration connectée à une des bornes (V, GND) d'une source d'alimentation (ALIM) référencée par rapport à une borne de référence fixe (GND) ; et
• une configuration déconnectée des bornes (V, GND) de la source d'alimentation, le procédé comportant :

◦ une étape (E10) de prélèvement d'au moins un signal source (S1, S2, S3) à au moins une borne de l'enroulement ;
◦ une première étape (E20) de transformation de l'au moins un signal source (S1, S2, S3) en au moins un signal image flottant (S_FPB1, S FPB2, S_FPB3) représentatif d'une force contre-électromotrice induite dans l'enroulement.
◦ une étape de conservation des composantes fréquentielles du signal source (S1, S2, S3) comprises dans une bande de fréquences déterminée, ladite bande de fréquences déterminée comprenant la fréquence de la force contre-électromotrice induite dans l'enroulement, ladite fréquence de la force contre-électromotrice induite dans l'enroulement étant susceptible de varier; et
◦ une étape de coupe des composantes fréquentielles du signal source (S1, S2, S3) n'étant pas comprises dans la bande de fréquences déterminée.

**14.** Procédé selon la revendication 13 **caractérisé en ce que** le procédé comporte en outre :
une deuxième étape (E30) de transformation de l'au moins un signal image flottant (S_FPB1, S_FPB2, S_FPB3) de manière à délivrer au moins un signal référencé (S_REF1, S_REF2, S_REF3) par rapport à une borne de référence fixe.

**15.** Procédé selon la revendication 14, **caractérisé en ce que** le procédé comporte en outre :

• une étape (E40) de binarisation de l'au moins un signal référencé (S_REF1, S_REF2, S_REF3) ; et
• une étape (E50) de génération d'une succession de séquences de commutation du module de commande (COM), à partir

◦ de l'au moins un signal référencé (S_REF1, S_REF2, S_REF3) et binarisé, et
◦ de la loi de commande prédéterminée,

en appliquant une correction prédéterminée qui tient compte d'au moins un retard ($\theta1$, $\theta2$, $\theta3$) introduit lors des étapes (E20, E30) de transformation.

**16.** Procédé selon la revendication 15, **caractérisé en ce que** la correction appliquée est prédéterminée au cours d'une phase de conception en fonction des composants électroniques constituant les modules de transformation (FPB1, FPB2, FPB3) et de référencement (REF1, REF2, REF3).

**17.** Procédé selon la revendication 15, **caractérisé en ce que** la correction appliquée peut prendre plusieurs valeurs prédéterminées au cours d'une phase de conception, en fonction de plages de valeurs d'au moins un paramètre de fonctionnement, et **en ce que** le procédé comporte en outre une étape (E45) de mesure de l'au moins un paramètre de fonctionnement, la correction appliquée étant choisie parmi les valeurs prédéterminées, en fonction de la valeur mesurée de l'au moins un paramètre de fonctionnement.

**Patentansprüche**

1. Kontrollvorrichtung für einen Motor (M), in der Art einen Stator und einen Rotor umfassend, wobei der Stator mit mindestens einer Wicklung ausgestattet ist, der Motor (M) durch ein Steuermodul (COM) angesteuert wird, das es entsprechend einem vorbestimmten Steuerungsgesetz ermöglicht, für die Klemmen (A, B, C) der mindestens einen Wicklung Folgendes auszuwählen:

   - eine an eine der Klemmen (V, GND) angeschlossene Konfiguration einer im Verhältnis zu einer festen Referenzklemme (GND) referenzierten Versorgungsquelle; und
   - eine von den Klemmen der Versorgungsquelle (V, GND) getrennte Konfiguration,
   - wobei die Kontrollvorrichtung mindestens ein Transformationsmodul (FPB1, FPB2, FPB3) beinhaltet, das es ermöglicht, ein Quellensignal (S1, S2, S3), das an mindestens einer der Klemmen (A, B, C) der Wicklung abgenommen wird, in ein schwebendes Bildsignal (S_FPB1, S_FPB2, S_FPB3) zu transformieren, das repräsentativ für eine gegenelektromotorische Kraft ist, die in die Wicklung induziert wird, wobei das Transformationsmodul aufweist:

      - eine aus Merkmalen des Motors (M) und/oder Merkmalen des Steuermoduls (COM) bestimmte Zeitkonstante;
      - mindestens eine an die mindestens eine der Wicklungsklemmen (A, B, C) angeschlossene erste Klemme, und eine zweite Klemme (N, B, C, A), wobei die erste und zweite Klemme in der Lage sind, im Verhältnis zu der festen Referenzklemme (GND) ein schwebendes Potenzial aufzuweisen, wobei das Quellensignal (S1, S2, S3) zwischen der ersten und zweiten Klemme abgenommen wird,
      - in dieser Vorrichtung die Frequenz der gegenelektromotorischen Kraft, die in die Wicklung induziert wird, in der Lage ist, in einem bestimmten Frequenzband zu variieren; und

   mindestens ein Transformationsmodul (FPB1, FPB2, FPB3) konfiguriert ist, um:

      - die Frequenzkomponenten des Quellensignals (S1, S2, S3), die in dem bestimmten Frequenzband enthalten sind, beizubehalten; und
      - die Frequenzkomponenten des Quellensignals (S1, S2, S3), die nicht in dem bestimmten Frequenzband enthalten sind, zu unterbrechen.

2. Vorrichtung nach Anspruch 1, **dadurch gekennzeichnet, dass** die zweite Klemme des mindestens einen Transformationsmoduls (FPB1, FPB2, FPB3) an eine andere Klemme (B, C, A) der Wicklung angeschlossen ist.

3. Vorrichtung nach Anspruch 1, **dadurch gekennzeichnet, dass** die zweite Klemme des mindestens einen Transformationsmoduls (FPB1, FPB2, FPB3) eine schwebende Referenzklemme (N) bildet.

4. Vorrichtung nach einem der Ansprüche 1 bis 3, **dadurch gekennzeichnet, dass** das Steuermodul (COM) aufweist:

   - eine Vielzahl von Schaltern (K1-K6), die imstande sind, zwischen einem durchgehenden Zustand und einem blockierenden Zustand umzuschalten;
   - eine Vielzahl von Freilaufdioden (D1-D6), die jeweils parallel zu einem jeweiligen Schalter (K1-K6) montiert sind, damit sich die Wicklung bei jeder Umschaltung eines Schalters (K1-K6) von seinem durchgehenden Zustand in seinen blockierenden Zustand durch eine Freilaufdiode (D1-D6) hindurch entlädt; und
   - dadurch, dass die Zeitkonstante des mindestens einen Transformationsmoduls (FPB1, FPB2, FPB3) größer oder gleich der stromführenden Zeit jeder Freilaufdiode (D1-D6) ist.

5. Vorrichtung nach einem der Ansprüche 1 bis 4, **dadurch gekennzeichnet, dass** die Zeitkonstante des mindestens einen Transformationsmoduls (FPB1, FPB2, FPB3) größer oder gleich der elektrischen Zeitkonstante des Motors (M) ist.

6. Vorrichtung nach einem der Ansprüche 1 bis 5, **dadurch gekennzeichnet, dass** sie mindestens ein Referenzierungsmodul (REF1, REF2, REF3) beinhaltet, das gestaltet ist, um das schwebende Bildsignal (S_FPB1, S FPB2, S_FPB3) in ein referenziertes Signal (S_REF1, S_REF2, S_REF3) im Verhältnis zu der festen Referenzklemme (GND) zu transformieren, wobei dieses Referenzierungsmodul (REF1, REF2, REF3) umfasst:

   - eine Eingangsstufe (10), die an das mindestens eine Transformationsmodul (FPB1, FPB2, FPB3) angeschlossen ist; und
- eine Ausgangsstufe (12), die von der Eingangsstufe isoliert ist.

7. Vorrichtung nach Anspruch 6, **dadurch gekennzeichnet, dass** das mindestens eine Referenzierungsmodul (REF1, REF2, REF3) gestaltet ist, um das schwebende Bildsignal (S_FPB1, S_FPB2, S_FPB3) in ein im Verhältnis zu der festen Referenzklemme (GND) referenziertes (S_REF1, S_REF2, S_REF3) und binärisiertes Signal zu transformieren, unter Annahme:

- eines ersten vorbestimmten Wertes, wenn das schwebende Bildsignal (S_FPB1, S_FPB2, S_FPB3) an den Klemmen der Eingangsstufe größer ist als ein Schwellenwert (V_SEUIL); und
- eines zweiten vorbestimmten Wertes in dem gegenteiligen Fall.

8. Vorrichtung nach Anspruch 7, **dadurch gekennzeichnet, dass** das mindestens eine Referenzierungsmodul (REF1, REF2, REF3) ein Mittel zum Anpassen des Schwellenwertes (V_SEUIL) umfasst.

9. Vorrichtung nach einem der Ansprüche 6 bis 8, **dadurch gekennzeichnet, dass** das mindestens eine Referenzierungsmodul (REF1, REF2, REF3) einen ersten und einen zweiten Optokoppler (14, 16) umfasst, die jeweils umfassen:

- eine erste und eine zweite Leuchtdiode (14a, 16a); und
- einen ersten und einen zweiten Fototransistor (14b, 16b), wobei die Anode der ersten Diode (14a) an die Kathode der zweiten Diode (16a) angeschlossen ist und die Anode der zweiten Diode (14b) an die Kathode der ersten Diode (14a) angeschlossen ist.

10. Vorrichtung nach einem der Ansprüche 6 bis 8, **dadurch gekennzeichnet, dass** das mindestens eine Referenzierungsmodul (REF1, REF2, REF3) einen Optokoppler umfasst.

11. Vorrichtung nach einem der Ansprüche 7 bis 10, **dadurch gekennzeichnet, dass** sie ein digitales Verarbeitungsmodul (TR) beinhaltet, das an das mindestens eine Referenzierungsmodul (REF1, REF2, REF3) angeschlossen ist, gestaltet, um das referenzierte (S_REF1, S_REF2, S_REF3) und binärisierte Signal zu verarbeiten, das von dem mindestens einen Referenzierungsmodul (REF1, REF2, REF3) geliefert wird, um:

- eine Aufeinanderfolge von Umschaltsequenzen gemäß dem Steuerungsgesetz des Steuermoduls (COM) zu erzeugen; und/oder
- die Anzahl der durch den Rotor durchgeführten Umdrehungen zu zählen; und/oder
- die Position des Rotors zu bestimmen.

12. Vorrichtung nach einem der Ansprüche 1 bis 11, **dadurch gekennzeichnet, dass** der Motor (M) ein bürstenloser Motor ist, der drei Wicklungen (E1, E2, E3) umfasst, die entsprechend einer Topologie in Dreieck oder Stern angeschlossen sind, und dadurch, dass die Vorrichtung beinhaltet:

- drei Transformationsmodule (FPB1, FPB2, FPB3), von denen jedes einer jeweiligen Wicklung zugeordnet ist, und die entsprechend einer Topologie in Dreieck oder Stern im Verhältnis zu den Klemmen (A, B, C) der Wicklungen angeschlossen sind; und
- drei Referenzierungsmodule (REF1, REF2, REF3), die entsprechend einer Topologie in Dreieck oder Stern im Verhältnis zu den Transformationsmodulen (FPB1, FPB2, FPB3) angeschlossen sind.

13. Kontrollverfahren für einen Motor, in der Art, einen Stator und einen Rotor umfassend, wobei der Stator mit mindestens einer Wicklung ausgestattet ist, der Motor (M) durch ein Steuermodul (COM) angesteuert wird, das es entsprechend einem vorbestimmten Steuerungsgesetz ermöglicht, für die Klemmen (A, B, C) der mindestens einen Wicklung Folgendes auszuwählen:

- eine an eine der Klemmen (V, GND) einer Versorgungsquelle (ALIM) angeschlossene Konfiguration, die im Verhältnis zu einer festen Referenzklemme (GND) referenziert ist; und
- eine von den Klemmen der Versorgungsquelle (V, GND) getrennte Konfiguration der Versorgungsquelle, wobei das Verfahren beinhaltet:
- einen Schritt (E10) des Abnehmens mindestens eines Quellensignals (S1, S2, S3) aus mindestens einer Wicklungsklemme;

- einen ersten Schritt (E20) des Transformierens des mindestens einen Quellensignals (S1, S2, S3) in mindestens ein schwebendes Bildsignal (S_FPB1, S_FPB2, S_FPB3), das repräsentativ für eine gegenelektromotorische Kraft ist, die in die Wicklung induziert wird,

- einen Schritt des Beibehaltens der Frequenzkomponenten des Quellensignals (S1, S2, S3), die in einem bestimmten Frequenzband enthalten sind, wobei das bestimmte Frequenzband die Frequenz der gegenelektromotorischen Kraft umfasst, die in die Wicklung induziert wird, wobei die Frequenz der gegenelektromotorischen Kraft, die in die Wicklung induziert wird, in der Lage ist, zu variieren; und

- einen Schritt des Unterbrechens der Frequenzkomponenten des Quellensignals (S1, S2, S3), die nicht in dem bestimmten Frequenzband enthalten sind.

**14.** Verfahren nach Anspruch 13, **dadurch gekennzeichnet, dass** das Verfahren weiter beinhaltet:
einen zweiten Schritt (E30) des Transformierens des mindestens einen schwebenden Bildsignals (S_FPB1, S_FPB2, S_FPB3), um mindestens ein referenziertes Signal (S_REF1, S_REF2, S_REF3) im Verhältnis zu einer festen Referenzklemme zu liefern.

**15.** Verfahren nach Anspruch 14, **dadurch gekennzeichnet, dass** das Verfahren weiter beinhaltet:

- einen Schritt (E40) des Binärisierens des mindestens einen referenzierten Signals (S_REF1, S_REF2, S_REF3); und
- einen Schritt (E50) des Erzeugens einer Aufeinanderfolge von Umschaltsequenzen des Steuermoduls (COM), ausgehend von
- dem mindestens einen referenzierten (S_REF1, S_REF2, S_REF3) und binärisierten Signal, und
- dem vorbestimmten Steuerungsgesetz,

unter Anwendung einer vorbestimmten Korrektur, die mindestens eine Verspätung ($\theta 1$, $\theta 2$, $\theta 3$) berücksichtigt, die bei den Transformationsschritten (E20, E30) eingebracht wird.

**16.** Verfahren nach Anspruch 15, **dadurch gekennzeichnet, dass** die angewandte Korrektur im Laufe einer Konzeptionsphase in Abhängigkeit von den elektronischen Komponenten vorbestimmt wird, aus denen sich die Transformationsmodule (FPB1, FPB2, FPB3) und die Referenzierungsmodule (REF1, REF2, REF3) zusammensetzen.

**17.** Verfahren nach Anspruch 15, **dadurch gekennzeichnet, dass** die angewandte Korrektur mehrere vorbestimmte Werte im Laufe einer Konzeptionsphase in Abhängigkeit von den Wertebereichen mindestens eines Betriebsparameters annehmen kann, und dadurch, dass das Verfahren weiter einen Schritt (E45) des Messens des mindestens einen Betriebsparameters beinhaltet, wobei die angewandte Korrektur aus den vorbestimmten Werten in Abhängigkeit von dem Messwert des mindestens einen Betriebsparameters ausgewählt wird.

**Claims**

**1.** A motor (M) control device of the type comprising a stator and a rotor, the stator being provided with at least one winding, the motor (M) being driven by a control module (COM) allowing to select, according to a predetermined control law, for terminals (A, B, C) of the at least one winding:

• a configuration connected to one of the terminals (V, GND) of a power supply source referenced relative to a fixed reference terminal (GND); and
• a configuration disconnected from the terminals (V, GND) of the power supply source,

- the control device including at least one transformation module (FPB1, FPB2, FPB3) allowing to transform a source signal (S1, S2, S3) taken off at least at one of the terminals (A, B, C) of the winding into a floating image signal (S_FPB1, S_FPB2, S_FPB3) representative of a counter-electromotive force induced in the winding, the transformation module having:

  ◦ a time constant determined from characteristics of the motor (M) and / or characteristics of the control module (COM);
  ◦ at least a first terminal connected to said at least one of the terminals (A, B, C) of the winding, and a second terminal (N, B, C, A), the first and second terminals being likely to have a floating potential relative to the fixed reference terminal (GND), the source signal (S1, S2, S3) being taken off between the first and second terminals,

- in this device the frequency of the counter-electromotive force induced in the winding is likely to vary in a determined frequency band; and

at least one transformation module (FPB1, FPB2, FPB3) is configured to:

◦ keep the frequency components of the source signal (S1, S2, S3) which are comprised in the determined frequency band; and

◦ cut the frequency components of the source signal (S1, S2, S3) which are not comprised in the determined frequency band.

2. The device according to claim 1, **characterized in that** the second terminal of the at least one transformation module (FPB1, FPB2, FPB3) is connected to another terminal (B, C, A) of the winding.

3. The device according to claim 1, **characterized in that** the second terminal of the at least one transformation module (FPB1, FPB2, FPB3) forms a floating reference terminal (N).

4. The device according to any one of claims 1 to 3, **characterized in that** the control module (COM) has:

• a plurality of switches (K1-K6) capable of switching between an on-state and an off-state;
• a plurality of freewheel diodes (D1-D6) each connected parallel to a respective switch (K1-K6), such that at each switching of a switch (K1-K6) from its on-state to its off-state, the winding discharges through a freewheel diode (D1-D6); and
• **in that** the time constant of the at least one transformation module (FPB1, FPB2, FPB3) is greater than or equal to the conduction time of each freewheel diode (D1-D6).

5. The device according to any one of claims 1 to 4, **characterized in that** the time constant of the at least one transformation module (FPB1, FPB2, FPB3) is greater than or equal to the electrical time constant of the motor (M).

6. The device according to any one of claims 1 to 5, **characterized in that** it includes at least one referencing module (REF1, REF2, REF3) designed to transform the floating image signal (S_FPB1, S FPB2, S_FPB3) into a referenced signal (S_REF1, S_REF2, S_REF3) relative to the fixed reference terminal (GND), this referencing module (REF1, REF2, REF3) comprising:

• an input stage (10) connected to the at least one transformation module (FPB1, FPB2, FPB3); and
• an output stage (12) isolated from the input stage.

7. The device according to claim 6, **characterized in that** the at least one referencing module (REF1, REF2, REF3) is designed to transform the floating image signal (S_FPB1, S_FPB2, S_FPB3) into a referenced signal (S_REF1, S_REF2, S_REF3) relative to the fixed reference terminal (GND) and binarized taking:

• a first predetermined value when the floating image signal (S_FPB1, S_FPB2, S_FPB3) at the terminals of the input stage is greater than a threshold (V_SEUIL); and
• a second predetermined value, if not.

8. The device according to claim 7, **characterized in that** the at least one referencing module (REF1, REF2, REF3) comprises means for adjusting the value of the threshold (V_SEUIL).

9. The device according to any of claims 6 to 8, **characterized in that** the at least one referencing module (REF1, REF2, REF3) comprises a first and a second optocouplers (14, 16) comprising respectively:

• a first and a second light-emitting diodes (14a, 16a); and
• a first and a second phototransistors (14b, 16b), the anode of the first diode (14a) being connected to the cathode of the second diode (16a) and the anode of the second diode (14b) being connected to the cathode of the first diode (14a).

10. The device according to any of claims 6 to 8, **characterized in that** the at least one referencing module (REF1, REF2, REF3) comprises an optocoupler.

11. The device according to any of claims 7 to 10, **characterized in that** it includes a digital processing module (TR) connected to the at least one referencing module (REF1, REF2, REF3), designed to process the referenced (S_REF1, S_REF2, S_REF3) and binarized signal output by the at least one referencing module (REF1, REF2, REF3) so as to:

- generate a succession of switching sequences according to the control law of the control module (COM); and / or
- count the number of revolutions performed by the rotor; and / or
- determine the position of the rotor.

12. The device according to any one of claims 1 to 11, **characterized in that** the motor (M) is a brushless motor comprising three windings (E1, E2, E3) connected following a triangle or a star topology, and **in that** the device includes:

- three transformation modules (FPB1, FPB2, FPB3) each associated with a respective winding and connected following a triangle or a star topology relative to the terminals (A, B, C) of the windings; and
- three referencing modules (REF1, REF2, REF3) connected following a triangle or a star topology relative to the transformation modules (FPB1, FPB2, FPB3).

13. A method for controlling a motor of the type comprising a stator and a rotor, the stator being provided with at least one winding, the motor (M) being driven by a control module (COM) allowing to select, according to a predetermined control law, for terminals (A, B, C) of the at least one winding:

- a configuration connected to one of the terminals (V, GND) of a power supply source (ALIM) referenced relative to a fixed reference terminal (GND); and
- a configuration disconnected from the terminals (V, GND) of the power supply source, the method including:

  ◦ a step (E10) of taking off at least one source signal (S1, S2, S3) at least at one terminal of the winding;
  ◦ a first step (E20) of transforming the at least one source signal (S1, S2, S3) into at least one floating image signal (S_FPB1, S FPB2, S_FPB3) representative of a counter-electromotive force induced in the winding.
  ◦ a step of keeping the frequency components of the source signal (S1, S2, S3) which are comprised in a determined frequency band, said determined frequency band comprising the frequency of the counter-electromotive force induced in the winding, said frequency of the counter-electromotive force induced in the winding being likely to vary; and
  ◦ a step of cutting the frequency components of the source signal (S1, S2, S3) which are not comprised in the determined frequency band.

14. The method according to claim 13 **characterized in that** the method further includes:
a second step (E30) of transforming the at least one floating image signal (S_FPB1, S_FPB2, S_FPB3) so as to output at least one referenced signal (S_REF1, S_REF2, S_REF3) relative to a fixed reference terminal.

15. The method according to claim 14, **characterized in that** the method further includes:

- a step (E40) of binarizing the at least one referenced signal (S_REF1, S_REF2, S_REF3); and
a step (E50) of generating a succession of switching sequences of the control module (COM), from

  ◦ the at least one referenced (S_REF1, S_REF2, S_REF3) and binarized signal, and
  ◦ the predetermined control law, by applying a predetermined correction which takes into account at least one delay ($\theta1$, $\theta2$, $\theta3$) introduced during the transformation steps (E20, E30).

16. The method according to claim 15, **characterized in that** the correction applied is predetermined during a design phase depending on the electronic components constituting the transformation (FPB1, FPB2, FPB3) and referencing (REF1, REF2, REF3) modules.

17. The method according to claim 15, **characterized in that** the correction applied can take several predetermined values during a design phase, depending on ranges of values of at least one operating parameter, and **in that** the method further includes a step (E45) of measuring the at least one operating parameter, the correction applied being selected among the predetermined values, depending on the measured value of the at least one operating parameter.

Fig. 1

EP 3 014 758 B1

Fig. 2

**Fig. 3**

**Fig. 4**

**Fig. 5**

Fig. 6

θ1min

θ1MAX

0    T1    T2    Ti    Tj    Retard θ1

θ1min+θ2

θ1MAX+θ2

0    T1    T2    Ti    Tj    Retard total θ

**Fig. 7**

θ1min

θ1MAX

0    T1    T2    Ti    Tj    Tj+1    Retard θ1

θ1min+θ2

θ1MAX+θ2

0    T1    T2    Ti    Tj    Tj+1    Retard total θ

**Fig. 8**

E10 ⌐→ Prélèvement S1

E20 ⌐→ Première transformation
S1→S_FPB1

E30 ⌐→ Deuxième transformation
S_FPB1→S_REF1

E40 ⌐→ Binarisation S_REF1

E45 ⌐→ Mesure

E50 ⌐→ Génération séquence
commutation

# Fig. 9

24

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009068314 A